# EUROPEAN PATENT APPLICATION

(11) **EP 2 568 122 A2**
(43) Date of publication of application: **13.03.2013**
(21) Application number: 12182871.9
(22) Date of filing: 04.09.2012
(51) Int. Cl.: F01D 15/10, F02C 7/32

(54) **Method and apparatus for extracting electrical power from a gas turbine engine**

(30) Priority: 08.09.2011 US 201113227597
(71) Applicant: General Electric Company, Schenectady, NY 12345 (US)
(72) Inventor: Taneja, Dinesh Nath, Grand Rapids, MI 49512 (US)
(74) Representative: Williams, Andrew Richard

(57) **Abstract**

A method and apparatus for powering an aircraft by extracting power from both the high pressure and low pressure spools (26, 28) of a gas turbine engine. DC power (48) can be generated using the high pressure spool (26) and AC power (56) can be generated using the low pressure spool (28).

## Description

### BACKGROUND OF THE INVENTION

Gas turbine engines, also known as combustion turbine engines, are rotary engines that extract energy from a flow of combusted gases passing through the engine onto a multitude of turbine blades. Gas turbine engines have been used for land and nautical locomotion and power generation, but are most commonly used for aeronautical applications such as for airplanes and helicopters. In airplanes, gas turbine engines are used for propulsion of the aircraft.

Gas turbine engines also usually power a number of different accessories such as generators, starter/generators, permanent magnet alternators (PMA), fuel pumps, and hydraulic pumps, e.g., equipment for functions needed on an aircraft other than propulsion. For example, contemporary aircraft need electrical power for avionics and motors. A generator coupled with a gas turbine engine will convert the mechanical power of the engine into electrical energy needed to power accessories.

Gas turbine engines can have two or more spools, including a low pressure (LP) spool that provides a significant fraction of the overall propulsion system thrust, and a high pressure (HP) spool that drives one or more compressors and produces additional thrust by directing exhaust products in an aft direction. A triple spool gas turbine engine includes a third, intermediate pressure (IP) spool.

It is known to couple an AC generator with the HP spool of gas turbine engine to produce electrical power in the form of alternating current (AC power).

Efforts have also been made to extract AC power from the LP spool in addition to the HP spool. U.S. Patent Application No. 12/981,044, filed December 29, 2010 discloses a system in which variable frequency AC power is drawn from the HP spool and constant frequency AC power is drawn from the LP spool. It is also known to rectify AC power generated from a gas turbine engine to produce DC power used by accessories in an aircraft.

### BRIEF DESCRIPTION OF THE INVENTION

In one embodiment, a gas turbine includes a high pressure (HP) spool, a low pressure (LP) spool, an AC generator, an LP drive assembly having an input mechanically coupled to the LP spool and an output mechanically coupled to the AC generator, a DC generator, and an HP drive assembly having an input mechanically coupled to the HP spool and an output mechanically coupled to the DC generator.

In another embodiment, a method for powering an aircraft system includes extracting AC power from a low pressure (LP) spool of a gas turbine engine, extracting DC power from a high pressure (HP) spool of the gas turbine engine, supplying the AC power extracted by the AC generator to a load, and supplying the DC power extracted by the DC generator to a load.

### BRIEF DESCRIPTION OF THE DRAWINGS

In the drawings:
FIG. 1 is a schematic cross-sectional diagram of a gas turbine engine for an aircraft in accordance with one embodiment of the invention;
FIG. 2 is a schematic block diagram of an electrical power system architecture for the gas turbine engine of FIG. 1;
FIG. 3 is a schematic illustration of a first winding of a dual windings generator of the electrical power system architecture shown in FIG. 2; and
FIG. 4 is a schematic illustration of a second winding of a dual windings generator of the electrical power system architecture shown in FIG. 2.

### DESCRIPTION OF EMBODIMENTS OF THE INVENTION

The subject matter disclosed herein relates to power extraction from an aircraft engine, and more particularly to an electrical power system architecture which enables production of electrical power from a multiple spool turbine engine. However, it is also contemplated that the subject matter disclosed herein has general application to electrical power system architectures in non-aircraft applications, such as industrial, commercial, and residential applications.

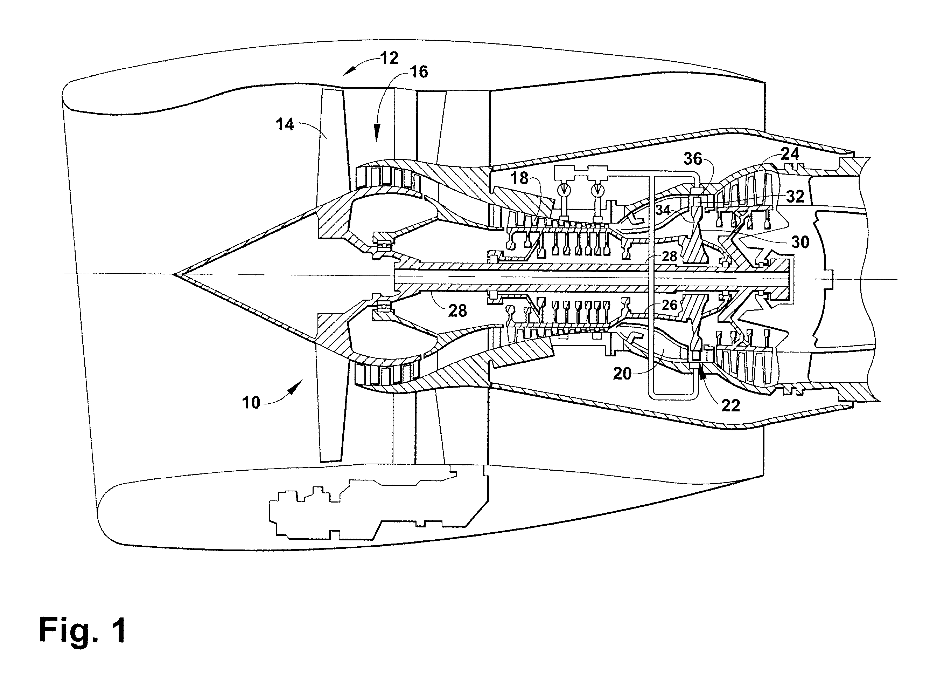

FIG. 1 is a schematic cross-sectional diagram of a gas turbine engine 10 for an aircraft in accordance with one embodiment of the invention. Engine 10 includes, in downstream serial flow relationship, a fan section 12 including a fan 14, a booster or low pressure (LP) compressor 16, a high pressure (HP) compressor 18, a combustion section 20, a HP turbine 22, and a LP turbine 24. A HP shaft or spool 26 drivingly connects HP turbine 22 to HP compressor 18 and a LP shaft or spool 28 drivingly connects LP turbine 24 to LP compressor 16 and fan 14. HP turbine 22 includes an HP turbine rotor 30 having turbine blades 32 mounted at a periphery of rotor 30. Blades 32 extend radially outwardly from blade platforms 34 to radially outer blade tips 36.

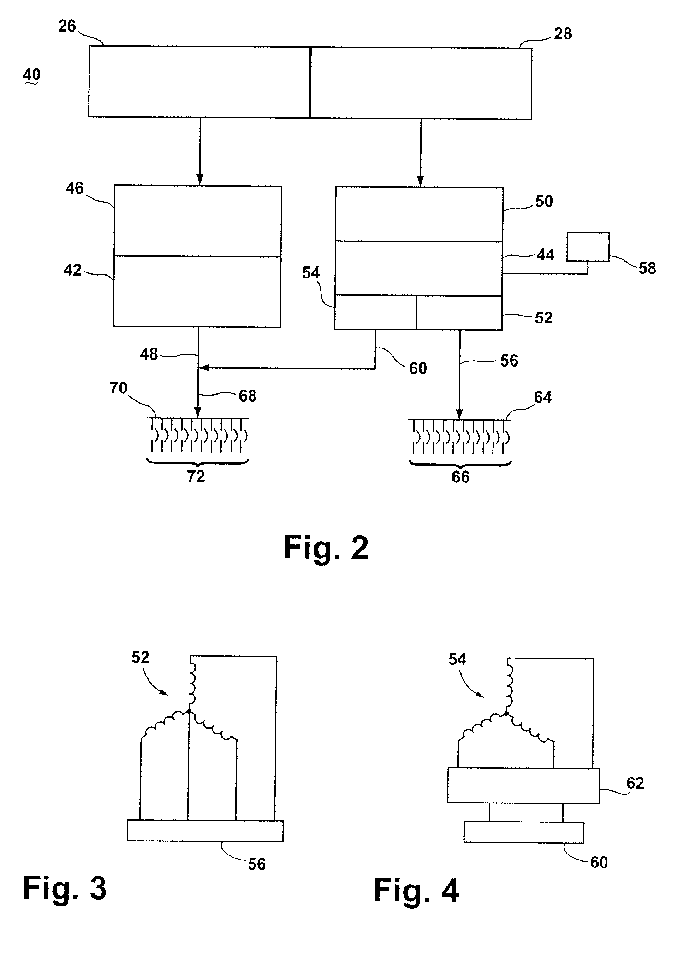

FIG. 2 is a schematic block diagram of an electrical power system architecture 40 for the gas turbine engine 10 of FIG. 1. While the system architecture 40 is described herein as being utilized by the gas turbine engine 10 shown in FIG. 1, the system architecture 40 has application to other engines as well. The system architecture 40 shown herein uses mechanical power provided by two spools, the HP spool 26 and the LP spool 28. However, the system architecture 40 could also be implemented on an engine having more than two spools, such as a 3-spool engine having an intermediate pressure (IP) spool in addition to the HP and LP spools. For an aircraft having multiple engines, the system architecture 40 shown in FIG. 1 can be applied to each engine.

In the illustrated embodiment, the system architecture 40 includes a DC generator 42, shown herein as a starter-generator 42, configured to produce an direct current (DC) power from mechanical power supplied by the HP spool 26 and an AC generator (or alternator) 44 configured to produce alternating current (AC) power from mechanical power supplied by the LP spool 28.

The HP spool 26 can be operably coupled with the DC starter-generator 42 by an HP drive assembly having an input mechanically coupled to the HP spool 26 and an output mechanically coupled to the DC starter-generator 42. One embodiment of the HP drive assembly is an accessory gearbox 46, where the DC starter-generator 42 can be mounted and coupled to the accessory gearbox 46. Within the accessory gearbox 46, power may also be transferred to other engine accessories. The DC starter-generator 42 converts mechanical power supplied by the HP spool 26 into electrical power and produces a DC power output 48. The DC starter-generator 42 also provides a starting function to the engine of the aircraft. Alternatively, the DC generator 42 on the HP side of the system architecture 40 may comprise a generator that does not provide a starting function to the engine of the aircraft. In this case, a separate starter motor connected to the accessory gearbox 46 can be provided to perform the starting function for the aircraft. Furthermore, the system architecture 40 can include multiple generators drawing mechanical power from the HP spool 26 to produce DC power in order to provide a measure of redundancy.

The LP spool 28 can be operably coupled with the AC generator 44 by an LP drive assembly having an input mechanically coupled to the LP spool 28 and an output mechanically coupled to the AC generator 44. One embodiment of the LP drive assembly is a constant speed drive (CSD) 50 which converts the variable speed input from the LP spool 28 to constant speed. The CSD 50 can be mechanically coupled to the AC generator 44 and drives the AC generator 44 at a constant speed. The AC generator 44 can be configured to produce alternating current (AC) power from mechanical power supplied by the LP spool 28, and can be a brushless AC generator. Although the embodiment shown herein is described as using one AC generator 44 on the LP side of the system architecture 40, another embodiment of the invention may use multiple AC generators 44 drawing mechanical power from the LP spool 28 to produce AC power in order to provide a measure of redundancy. Furthermore, while a separate AC generator 44 and CSD 50 are discussed herein, an integrated drive generator which combines the CSD 50 and generator 44 into a common unit can alternatively be used.

The AC generator 44 can have a main stator with dual windings 52, 54, with each winding configured to provide a different output. The first winding 52 is configured to provide a constant frequency AC power output 56 for driving motor loads without the need for a motor controller. The AC generator 44 has a generator control unit 58 that is configured to regulate the voltage of the constant frequency AC power output 56. For example, some common avionics use 26, 28, or 115 V AC. FIG. 3 is a schematic illustration of the first winding 52 of the AC generator 44 shown in FIG. 2.

The second winding 54 can be configured to convert a portion of the AC power produced by the AC generator 44 to a DC power output 60. FIG. 4 is a schematic illustration of the second winding 54 of the AC generator 44 shown in FIG. 2. The second winding 54 can be coupled with a phase angle controlled rectifier bridge 62 for producing the DC power output 60 at a desired voltage. For example, the rectifier bridge 62 can be configured to produce 270 VDC, among other possible outputs. Various other AC-to-DC power conversion schemes can be employed within the system architecture 40.

In operation, with the gas turbine engine 10 started, HPT 22 rotates the HP spool 26 and the LPT 24 rotates the LP spool. The accessory gearbox 46 is driven by the rotating HP spool 26, and transmits mechanical power from the HP spool 26 to the DC starter-generator 42. The DC starter-generator 42 converts mechanical power supplied by the HP spool 26 into electrical power and produces the DC power output 48. The CSD 50 is driven by the rotating LP spool 28, and transmits mechanical power from the LP spool 28 to the AC generator 44. The AC generator 44 converts the mechanical power supplied by the LP spool 28 into electrical power, a portion of which can be produced as the AC power output 56 by the first winding 52 and a portion of which can be produced as the DC power output 60 by the second winding 54. The AC power output 56 can be provided to an electrical bus 64 configured to supply AC power to one or more loads 66 that require an AC power supply. The DC power output 60 of the AC generator 44 driven by the LP spool 28 is paralleled with the DC output 48 of the DC starter-generator 42 driven by the HP spool 26 to create a combined DC power output 68. The combined DC power output 68 can then be provided to an electrical bus 70 configured to supply DC power to one or more loads 72 that require a DC power supply. Depending on the type of load drawing power, the DC and/or AC power extracted by the system architecture 40 may undergo further processing before being used by the loads 66, 72.

The paralleling of the DC power output 60 generated by the LP spool 28 with the DC power output 48 generated by the HP spool 26 enables the DC loads 72 of the aircraft to be shared by the HP spool 26 and the LP spool 28. The DC load sharing between the HP and LP spools 26, 28 can be accomplished seamlessly by regulating the excitation of the DC starter-generator 42. For example, during an aircraft descend mode, load on the DC starter-generator 42 driven by the HP spool 26 can be minimized at the expense of the DC power output 60 from the AC generator 44 driven by the LP spool 28. Such a load sharing scheme can have the effect of avoiding a potential stall issue within the gas turbine engine 10 of FIG. 1. Furthermore, the load sharing scheme increases the operational efficiency of the gas turbine engine 10. The ratio of load sharing between the HP and LP spools 26, 28 can be determined by controlling excitation of the generators 42, 44.

The system architecture disclosed herein provides a hybrid electrical power system to an aircraft. One advantage that may be realized in the practice of some embodiments of the described systems and methods is that both AC and DC power can be extracted from the gas turbine engine 10. The operating efficiency of the gas turbine engine 10 is also increased by seamlessly controlling the power drawn from HP and LP spools 26, 28. Furthermore, in cases where the loads includes induction motors, the need for a motor controller or motor control electronics can be eliminated since a constant frequency AC power output 56 is produced by the first winding 52.

Another advantage that may be realized in the practice of some embodiments of the described systems and methods is that the system architecture 40 can offer a level of redundant DC power generation, since DC power can be extracted from the LP spool 28 as well as the HP spool 26 of the gas turbine engine 10. Drawing power from both spools 26, 28 offers increased redundancy for DC power, such that in the event of a failure of one of the spools 26, 28 or generators 42, 44, DC power may still be extracted from the remaining operational spool 26, 28 and generator 42, 44.

Still another advantage that may be realized in the practice of some embodiments of the described systems and methods is the avoidance of engine stall issues that are typically encountered during a descend mode of the aircraft by sharing the DC load between the HP and LP spools 26, 28. Being able to draw power from the LP spool as well as the HP spool permits allows the aircraft to run at lower rpms during descent without risk of stall, thereby preserving fuel efficiency of the aircraft.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the invention are indicated in the following clauses:
1. A gas turbine engine comprising:
   a high pressure (HP) spool;
   a low pressure (LP) spool;
   an AC generator;
   an LP drive assembly having an input mechanically coupled to the LP spool and an output mechanically coupled to the AC generator;
   a DC generator; and
   an HP drive assembly having an input mechanically coupled to the HP spool and an output mechanically coupled to the DC generator.
2. The gas turbine engine of clause 1 wherein the AC generator includes a first winding for AC output and a second winding for DC output.
3. The gas turbine engine of clause 2 wherein the DC output of the AC generator is paralleled with an output of the DC generator.
4. The gas turbine engine of clause 2 wherein the second winding comprises a phase controlled rectifier bridge.
5. The gas turbine engine of clause 1 wherein the LP drive assembly comprises a constant speed mechanical drive.
6. The gas turbine engine of clause 1 wherein the HP drive assembly comprises an accessory gearbox.
7. The gas turbine engine of clause 1 wherein the DC generator comprises a starter-generator configured to turn the HP spool during an engine start process.
8. A method for powering an aircraft system comprising:
   extracting AC power from a low pressure (LP) spool of a gas turbine engine;
   extracting DC power from a high pressure (HP) spool of the gas turbine engine;
   supplying the AC power extracted by the AC generator to a load; and
   supplying the DC power extracted by the DC generator to a load.
9. The method of clause 1 wherein extracting AC power comprises driving an AC generator with mechanical power supplied by the LP spool.
10. The method of clause 9 wherein driving the AC generator comprises operating a constant speed mechanical drive coupled between the LP spool and the AC generator.
11. The method of clause 10 wherein supplying the AC power extracted by the AC generator comprises supplying constant frequency AC power.
12. The method of clause 1 wherein extracting DC power comprises driving a DC generator with mechanical power supplied by the HP spool.
13. The method of clause 12 wherein driving the DC generator comprises operating an accessory gearbox coupled between the HP spool and the DC generator.
14. The method of clause 1 wherein extracting DC power comprises driving a DC generator with mechanical power supplied by the HP spool.
15. The method of clause 14 wherein the DC generator comprises a starter-generator, and further comprising starting the gas turbine engine by driving the HP spool with the starter-generator.
16. The method of clause 1, and further comprising extracting DC power from the LP spool of the gas turbine engine.
17. The method of clause 16, and further comprises paralleling the DC power extracted from the LP spool with the DC power extracted from the HP spool.
18. The method of clause 16 wherein extracting DC power comprises driving an AC generator with mechanical power supplied by the LP spool.
19. The method of clause 18 wherein extracting DC power further comprises converting a portion of the AC power extracted from the LP spool into DC power.
20. The method of clause 19 wherein converting a portion of the AC power extracted from the LP spool into DC power comprises rectifying a portion of the AC power.

## Claims

1. A gas turbine engine (10) comprising:
a high pressure (HP) spool (26);
a low pressure (LP) spool (28);
an AC generator (44);
an LP drive assembly (50) having an input mechanically coupled to the LP spool (28) and an output mechanically coupled to the AC generator (44);
a DC generator (42); and
an HP drive assembly (46) having an input mechanically coupled to the HP spool (26) and an output mechanically coupled to the DC generator (42).

2. The gas turbine engine (10) of claim 1, wherein the AC generator (44) includes a first winding (52) for AC output (56) and a second winding (54) for DC output (60).

3. The gas turbine engine (10) of claim 2, wherein the DC output (60) of the AC generator (44) is paralleled with an output (48) of the DC generator (42).

4. The gas turbine engine (10) of either of claim 2 or 3, wherein the second winding (54) comprises a phase controlled rectifier bridge (62).

5. The gas turbine engine (10) of any of claims 1 to 4, wherein the LP drive assembly (50) comprises a constant speed mechanical drive (50).

6. The gas turbine engine (10) of any of claims 1 to 5, wherein the HP drive assembly (46) comprises an accessory gearbox (46).

7. The gas turbine engine (10) of any of claims 1 to 6, wherein the DC generator (42) comprises a starter-generator configured to turn the HP spool (26) during an engine start process.

8. A method for powering an aircraft system comprising:
extracting AC power (56) from a low pressure (LP) spool (28) of a gas turbine engine (10);
extracting DC power (48) from a high pressure (HP) spool (26)of the gas turbine engine;
supplying the extracted AC power to a load (66); and
supplying the extracted DC power to a load (72).

9. The method of claim 8, and further comprising extracting DC power (60) from the LP spool (28) of the gas turbine engine (10).

10. The method of claim 9, and further comprises paralleling the DC power (60) extracted from the LP spool (28) with the DC power (48) extracted from the HP spool (26).

11. The method of either of claim 9 or 10, wherein extracting DC power comprises driving an AC generator (44) with mechanical power supplied by the LP spool (28).

12. The method of claim 11, wherein extracting DC power further comprises converting a portion of the AC power extracted from the LP spool (28) into DC power (60).

13. The method of claim 12, wherein converting a portion of the AC power extracted from the LP spool (28) into DC power (60) comprises rectifying a portion of the AC power.
